Europäisches Patentamt

European Patent Office

Office européen des brevets

(19)

(11) Veröffentlichungsnummer : **0 048 715**
**B1**

(12) EUROPÄISCHE PATENTSCHRIFT

(45) Veröffentlichungstag der Patentschrift :
30.01.85

(21) Anmeldenummer : 81900441.7

(22) Anmeldetag : 24.01.81

(86) Internationale Anmeldenummer :
PCT/DE 81/00020

(87) Internationale Veröffentlichungsnummer :
WO/8102953 (15.10.81 Gazette 81/24)

(51) Int. Cl.⁴ : **H 01 S    3/10**

(54) WELLENLEITERLASER MIT FRUSTRATIONSELEMENT.

(30) Priorität : 05.04.80 DE 3013302

(43) Veröffentlichungstag der Anmeldung :
07.04.82 Patentblatt 82/14

(45) Bekanntmachung des Hinweises auf die Patenterteilung : 30.01.85 Patentblatt 85/05

(84) Benannte Vertragsstaaten :
FR GB NL SE

(56) Entgegenhaltungen :
EP-A- 0 001 032
FR-A- 1 362 805
US-A- 3 500 240
US-A- 3 940 712

(73) Patentinhaber : ELTRO GmbH Gesellschaft für
Strahlungstechnik
Kurpfalzring 106 Postfach 10 21 20
D-6900 Heidelberg 1 (DE)

(72) Erfinder : KARNING, Heinrich
Albert-Fritz-Strasse 6
D-6900 Heidelberg (DE)
Erfinder : PREIN, Franz
Tulpenweg 3
D-6901 Waldhilsbach (DE)

(74) Vertreter : Muschka, Wilhelm, Dipl.-Ing.
Eltro GmbH Gesellschaft für Strahlungstechnik Kurpfalzring 106 Postfach 10 21 20
D-6900 Heidelberg 1 (DE)

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

## Beschreibung

Die Erfindung bezieht sich auf eine Laseranordnung mit zwei in einem Medium parallel verlaufenden Strahlengängen, die an ihrem einen Ende von einem reflektierend und als Teil eines Frustrationselements ausgebildeten sowie der Strahlenauskopplung und -faltung dienenden optischen Umlenkelement begrenzt werden, wobei das Umlenkelement zusammen mit einem zweiten, vom Laserkörper abgesetzten optischen Element das Frustrationselement eines Lasers bildet, dessen veränderbare Spaltbreite zwischen dem der Strahlenauskopplung und -faltung dienenden Umlenkelement und dem zweiten optischen Element vorgesehen ist.

Eine solche Laseranordnung ist in der GB-A-1 006 804 behandelt. Die hieraus bekannte Figur regt jedoch den Fachmann allenfalls dazu an, das gasförmige Lasermedium seitlich mit einem totalreflektierenden optischen Element und einem optischen Element mit steuerbarer Transparenz, die beide einen Winkel von 90° bilden, abzuschließen. Auch waren Wellenleiterlaser zu diesem Zeitpunkt noch nicht bekannt, so daß das Dokument keinen Hinweis zur Verwendung der hier behandelten Anordnung bei einem Wellenleiterlaser enthalten kann.

Die Aufgabe der Erfindung wird in der Weiterbildung der gattungsgemäßen Anordnung in bezug auf die Verwendbarkeit bei einem Wellenleiterlaser und die Ausnutzung des Umlenkelements für die Optimierung verschiedener im wesentlichen Strahlung und Materialien beeinflussender Parameter gesehen. Diese Aufgabe wird erfindungsgemäß dadurch gelöst, daß

a) eine solchermaßen ausgebildete Anordnung bei einem Entladungskanäle enthaltenden Wellenleiterlaser Verwendung findet und

b) das der Strahlenauskopplung und -faltung dienende Umlenkelement vom Laserkörper abgesetzt ist.

Im folgenden wird an Hand einer Figur ein Ausführungsbeispiel der Erfindung näher erläutert :

Die zueinander parallelen Strahlengänge 2 und 3 des Lasers 1 verlaufen in einem beliebigen Medium. An der einen Stirnseite 8 ist der — in Blickrichtung obere — Kanal 2 von einem totalreflektierenden optischen Element 6, z. B. einem Spiegel, und der Kanal 3 von einem der Auskopplung dienenden durchlässigen optischen Element 7, einem Fenster, begrenzt. Die Auskopplung ist mit durch einen mit ausgezogener Linie gezeichneten Pfeil 16 angedeutet. Der gegenüberliegenden Stirnseite 9 liegt das Umlenkelement 10 aus optisch brechendem Material, z. B. ein Dachkantprisma, mit seiner längsten Seite 10″ mit Abstand gegenüber und lenkt den Laserstrahl um 2 × 90° von einem Entladungskanal in den anderen. Seiner Schräge 10' liegt mit geringfügigem Abstand ein weiteres Dachkantprisma 11 mit seiner langen Seite 11″ gegenüber, wobei letztere der Länge der Schräge 10' angepaßt ist. Das Dachkantprisma 11 ist mit Hilfe des Piezoantriebs 12 in Doppelpfeil-Richtung verschiebbar, so daß sich dadurch die Spaltgröße und damit wiederum die Schwingung des Laserstrahls beeinflussen läßt. Eine solche Prismenanordnung mit veränderbarer Spaltbreite wird als Frustrationselement bezeichnet.

Bei einem anderen Ausführungsbeispiel kann auch der zumindest teildurchlässige Spiegel 7 durch einen totalreflektierenden Spiegel ersetzt sein. Die Auskopplung des Strahls erfolgt dann am gegenüberliegenden Ende über die im geöffneten Zustand reflektierende Fläche 10' des Frustrationselementes 10, 11, und zwar in Richtung des mit gestrichelter Linie gezeichneten Pfeils 17. Der Winkel zur Längsachse muß dabei nicht unbedingt 90° betragen, sondern hängt von dem verwendeten Material ab. Bei Quarz beträgt er z. B. 106°.

Bei einem weiteren Ausführungsbeispiel kann das optische Element 7 auch nur zu 70 % oder ähnlich durchlässig ausgebildet sein. In diesem Fall können dann in beiden Pfeilrichtungen zeitlich versetzte Pulse ausgekoppelt werden.

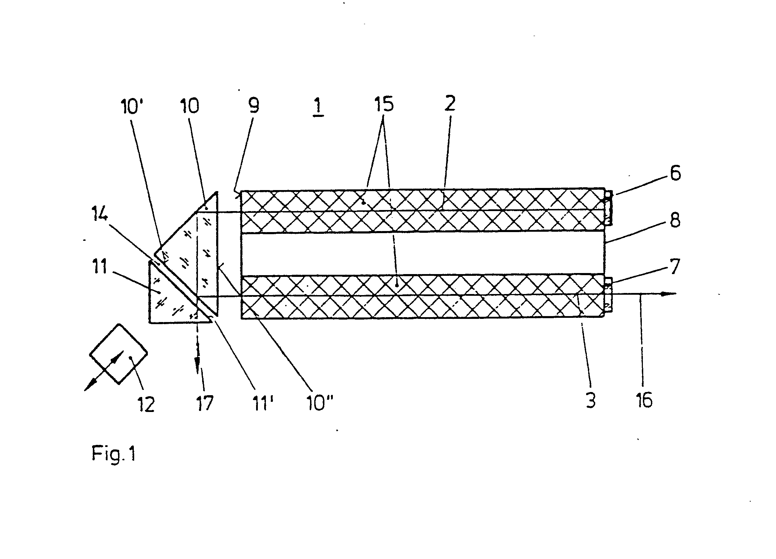

## Anspruch

Laseranordnung mit zwei in einem Medium parallel verlaufenden Strahlengängen, die an ihrem einen Ende von einem reflektierend und als Teil eines Frustrationselements ausgebildeten sowie der Strahlenauskopplung und -faltung dienenden optischen Umlenkelement (10) begrenzt werden, wobei das Umlenkelement (10) zusammen mit einem zweiten, vom Laserkörper abgesetzten optischen Element (11) das Frustrationselement eines Lasers bildet, dessen veränderbare Spaltbreite (14) zwischen dem der Strahlenauskopplung und -faltung dienenden Umlenkelement (10) und dem zweiten optischen Element (11) vorgesehen ist, dadurch gekennzeichnet, daß.

a) eine solchermaßen ausgebildete Anordnung bei einem Entladungskanäle enthaltendem Wellenleiterlaser Verwendung findet und

b) das der Strahlenauskopplung und -faltung dienende Umlenkelement (10) vom Laserkörper abgesetzt ist.

## Claim

Laser arrangement with two beam paths extending parallel in a medium and bounded at one end by a reflective optical deflecting element (10) forming part of a frustration element and serving for beam uncoupling and folding, said deflecting element (10) together with a second optical element (11) set off from the laser body forming the frustration element of a laser whose variable width of gap (14) is provided between the deflecting element (10) serving for beam uncoupling and folding and the second optical element (11), characterised in that

a) an arrangement constructed in such a manner is used in a wave guide laser containing discharge channels and

b) the deflecting element (10) serving for beam uncoupling and folding is set off from the laser body.

**Revendication**

Installation de laser présentant deux trajectoires de rayons parallèles traversant un fluide et limitées à l'une de leurs extrémités par un élément de renvoi optique (10) réfléchissant réalisé en tant que partie d'un élément de frustration et servant également à la séparation et à la dispersion des rayons, l'élément de renvoi (10) formant, avec un deuxième élément optique (11) séparé du corps du laser, l'élément de frustration d'un laser dont la largeur de fente variable (14) est prévue entre l'élément de renvoi (10) servant à la séparation et à la dispersion des rayons et le deuxième élément optique (11), caractérisée en ce que

a) une installation ainsi réalisée est utilisable pour un laser guide-ondes présentant des canaux de décharge et

b) l'élément de renvoi (10) servant à la séparation et à la dispersion des rayons est séparé du corps du laser.

Fig. 1